# EUROPEAN PATENT SPECIFICATION

(11) **EP 3 179 711 B1**
(45) Date of publication and mention of the grant of the patent: **07.07.2021**
(21) Application number: 16202972.2
(22) Date of filing: 08.12.2016
(51) Int. Cl.: H04N 5/235, H04N 5/232

(54) **METHOD AND APPARATUS FOR PREVENTING PHOTOGRAPH FROM BEING SHIELDED**
VERFAHREN UND VORRICHTUNG ZUR VERHINDERUNG DER ABSCHIRMUNG EINER FOTOAUFNAHME
PROCÉDÉ ET APPAREIL POUR EMPÊCHER UNE PHOTOGRAPHIE D'ÊTRE PROTÉGÉE

(30) Priority: 08.12.2015 CN 201510897800
(43) Date of publication of application: 14.06.2017
(73) Proprietor: Xiaomi Inc., Beijing 100085 (CN)
(72) Inventor: PAN, Long, BEIJING, 100085 (CN); WANG, Guangjian, BEIJING, 100085 (CN); ZHU, Ruixian, BEIJING, 100085 (CN)
(74) Representative: Cabinet Beau de Loménie

(56) References cited:
- US-A1- 2004 012 682
- US-A1- 2009 046 197
- US-A1- 2012 013 708

## Description

### TECHNICAL FIELD

The present disclosure generally relates to the communication technology, and more particularly, to a method and an apparatus for preventing a photograph from being shielded.

### BACKGROUND

An existing smart phone is provided with a camera function internally, such that a user may use the camera function in the smart phone to take a picture.

In the related art, when the user uses the smart phone to take a picture, since the hand may shield the camera (i.e. part of the hand may be in front of the camera) and the user may not be aware at this time that the camera is shielded in some cases, for example in a case of snap shooting, the photographic effect of the picture may be affected. US 2004/012682 A1, relates to an image capturing apparatus. According to paragraphs [0066], [0079]-[0080]and [0100], it is determined whether a low brightness area of a position which does not shift exists only in the peripheral portions and not the center portion of an image. In an example, when the low brightness area of a position which does not change has an overlapped portion with the peripheral portion at the left end or the peripheral portion at the right end of the image, the low brightness area may be determined as a finger area. In another example, when the ratio of the number of pixels of flesh color to all of pixels in the low brightness area which does not shift exceeds a predetermined value, the low brightness area may be determined as the finger area. That is, with the low brightness area, by determining whether the overlapped region exists or based on the hue information of the low brightness area, the finger area may be determined.

### SUMMARY

The present application relates to a method for preventing a photograph from being shielded according to independent claim 1, an apparatus for preventing a photograph from being shielded according to independent claim 5, a device for preventing a photograph from being shielded according to independent claim 9 and a computer-readable storage medium according to independent claim 10. Further aspects of the present application are defined by the dependent claims.

It should be understood that, the general description above and the following detailed description are merely illustrative and explanatory, and shall not be construed to limit the present disclosure. The scope of the invention is defined by the appended claims.

### BRIEF DESCRIPTION OF THE DRAWINGS

The drawings shown herein, which are incorporated in and constitute a part of the specification, illustrate embodiments of the present disclosure and used for explaining the principle of the present disclosure together with the specification.
Fig. 1 shows a flow chart of steps in a method for preventing a photograph from being shielded according to an example embodiment of the present disclosure.
Fig. 2 shows a flow chart of other steps in the method for preventing a photograph from being shielded according to the example embodiment of the present disclosure.
Fig. 3 shows a flow chart of yet other steps in the method for preventing a photograph from being shielded according to the example embodiment of the present disclosure.
Fig. 4 shows a flow chart of a method for preventing a photograph from being shielded according to still another example embodiment of the present disclosure.
Fig. 5 shows a flow chart of a method for preventing a photograph from being shielded according to still yet another example embodiment of the present disclosure.
Fig. 6 shows a flow chart of a method for preventing a photograph from being shielded according to still yet another example embodiment of the present disclosure.
Fig. 7 is a block diagram showing certain main elements of an apparatus for preventing a photograph from being shielded according to an example embodiment of the present disclosure.
Fig. 8 is a block diagram showing more details of the apparatus for preventing a photograph from being shielded according to the example embodiment of the present disclosure.
Fig. 9 is a block diagram showing yet more details of the apparatus for preventing a photograph from being shielded according to the example embodiment of the present disclosure.
Fig. 10 shows a block diagram of an apparatus for preventing a photograph from being shielded according to another example embodiment of the present disclosure.
Fig. 11 shows a block diagram of an apparatus for preventing a photograph from being shielded according to still another example embodiment of the present disclosure.
Fig. 12 shows a block diagram of an apparatus for preventing a photograph from being shielded according to yet another example embodiment of the present disclosure.
Fig. 13 shows a block diagram of a terminal according to an example embodiment of the present disclosure.
Fig. 14 shows a block diagram of a device 800 for preventing a photograph from being shielded according to an example embodiment of the present disclosure.

### DETAILED DESCRIPTION

Now the example embodiments will be described in detail, in which the examples are shown in the accompanying drawings. In the specification with reference to the drawings, unless specified or limited otherwise, the same or similar elements and the elements having same or similar functions are denoted by like reference numerals. The implementations described in the following example embodiments do not represent all implementations of the present disclosure. Instead, they are merely examples of the apparatus and method consistent with some aspects of the present disclosure described by the appended claims.

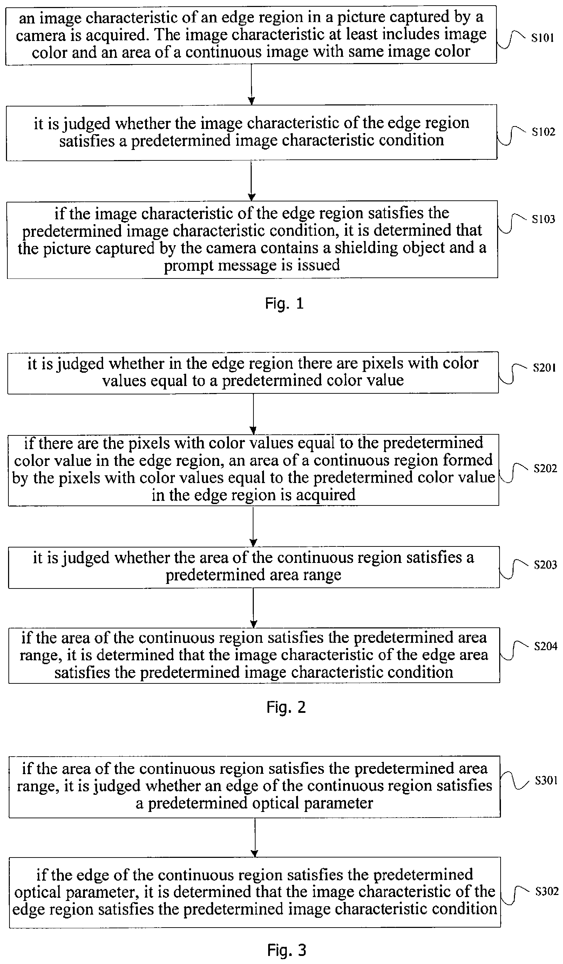

Fig. 1 shows a flow chart of steps in a method for preventing a photograph from being shielded according to an example embodiment of the present disclosure. As shown in Fig. 1, the method is applied in a terminal and includes the following.

In block S101, an image characteristic of an edge region in a picture captured by a camera is acquired. The image characteristic at least includes image color and an area of a continuous image with same image color.

The edge region means a region formed by extending a preset distance towards the interior of the picture captured by the camera from a boundary of the picture. For different edges, the preset distance nay be distinct. For example, in general, the lower edge of the picture captured by the camera is more prone to be shielded inadvertently, such that the preset distance for the lower edge may be set to be bigger. And the lower edge may be determined according to an angle at which the smart phone is, and the angle at which the smart phone is may be detected by sensing of gravitational forces (e.g. using a gravity sensor of the smart phone). If the terminal is in a horizontal mode, it may be determined by gravitational sensing whether the left side or right side of the terminal is at the lower edge.

When a hand of the user shields the camera, images in the picture captured by the camera have some common characteristics. For example, the color of these images is in accordance with a specific color, and these images with color in accordance with the specific color may form a continuous region.

In block S102, it is judged whether the image characteristic of the edge region satisfies a predetermined image characteristic condition.

Since the images formed when the hand shields the camera have regular characteristics, when the camera captures the picture, it may be judged whether the image of an edge region matches with the predetermined image characteristic condition with some regular characteristics.

In block S103, if the image characteristic of the edge region satisfies the predetermined image characteristic condition, it is determined that the picture captured by the camera contains a shielding object and a prompt message is issued.

If the image of edge region is in accordance with the predetermined image characteristic condition, it may be determined that the picture is shielded, and the terminal may provide the prompt image to the user in time, for example, popping out a prompt message or making a prompt sound, such that the user may adjust operational postures in time so as to ensure a photograph having desired visual effect can be taken.

In this embodiment, the image characteristic of the edge region in the picture captured by the camera is acquired and compared with the predetermined image characteristic condition, and if the image characteristic matches with the predetermined image characteristic condition, it may be determined that the picture is shielded, and then the user is reminded to adjust operational postures timely so as to ensure that the desired effect of the photograph is not adversely affected.

Fig. 2 shows a flow chart of other steps in the method for preventing a photograph from being shielded according to the present example embodiment of the present disclosure. As shown in Fig. 2, the above block S102 specifically includes the following.

In block S201, it is judged whether in the edge region there are pixels with color values equal to a predetermined color value.

As described above, if the hand of the user shields the camera, images in the picture captured by the camera have some common characteristics. For example, the color of these images is in accordance with a specific color, and these images with color in accordance with the specific color may form a continuous region.

In this block S201, the terminal first judges whether in the edge region there are the pixels with color values equal to the predetermined color value, in which the predetermined color value may, for example, be a color value corresponding to pink or corresponding to gray.

In block S202, if there are the pixels with color values equal to the predetermined color value in the edge region, an area of a continuous region formed by the pixels with color values equal to the predetermined color value in the edge region is acquired.

The continuous region is formed by splicing (connecting) adjacent pixels, and the color values of these pixels are equal to the predetermined color value, i.e., the continuous region cannot contain a pixel with another color value.

In block S203, it is judged whether the area of the continuous region satisfies a predetermined area range.

The area of the continuous region is an area formed by the adjacent pixels with color values equal to the predetermined color value. If the area reaches or exceeds a preset area, it may be considered that the picture is shielded.

For different edges, the predetermined area range may be set to be distinct. For example, for the lower edge, the predetermined area range may be set to be bigger than for the upper edge.

In block S204, if the area of the continuous region satisfies the predetermined area range, it is determined that the image characteristic of the edge region satisfies the predetermined image characteristic condition.

In this embodiment, by determining whether the edge region contains the predetermined color value and whether the area of the region formed by the predetermined color value reaches a predetermined area, it may be determined whether the picture is shielded, thus improving the accuracy of identifying the shielding object.

Fig. 3 shows a flow chart of yet more steps of the method for preventing a photograph from being shielded according to the present example embodiment of the present disclosure. As shown in Fig. 3, based on the determining method shown in Fig. 2, the following determining method may be added.

In block S301, if the area of the continuous region satisfies the predetermined area range, it is judged whether an edge of the continuous region satisfies a predetermined optical parameter.

If the picture is shielded by the user's hand, the edge of the sub image formed when the picture is shielded exhibits a diffraction optical characteristic, i.e., the specific optical parameter here is existence of a diffraction effect. In this block, it is judged whether the edge of the continuous region satisfies the predetermined optical parameter.

In block S302, if the edge of the continuous region satisfies the predetermined optical parameter, it is determined that the image characteristic of the edge region satisfies the predetermined image characteristic condition.

In this embodiment, under the prerequisite of satisfying the predetermined color value and the predetermined area range, the terminal further determines whether the image of the edge region satisfies the predetermined optical parameter, and if yes, it is considered that the picture is shielded. In this way, the accuracy of identifying the shielding object is further improved.

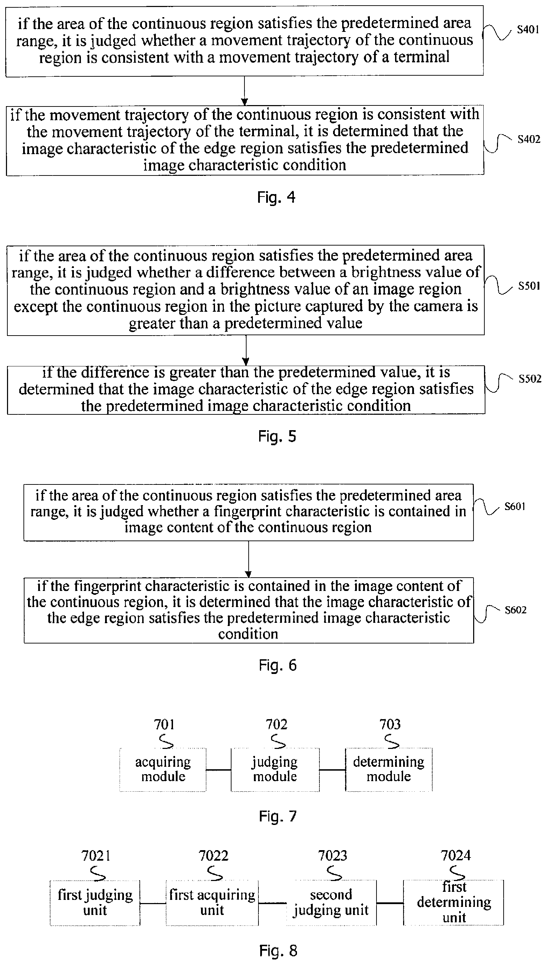

Fig. 4 shows a flow chart of a method for preventing a photograph from being inadvertently shielded according to yet another example embodiment of the present disclosure. As shown in Fig. 4, based on the determining method shown in Fig. 2, the following determining method may be added.

In block S401, if the area of the continuous region satisfies the predetermined area range, it is judged whether a movement trajectory of the continuous region is consistent with a movement trajectory of a terminal.

When the user takes a picture, the scene to be photographed may be in a static state, or may have a movement trajectory different from the movement trajectory of the terminal. If the movement trajectory of the edge region in the picture is consistent with the movement trajectory of the terminal, it may be considered that the edge region is shielded by the user's hand.

It may be determined whether the movement trajectory of the continuous region is consistent with that of the terminal by a positioning method or the like.

In block S402, if the movement trajectory of the continuous region is consistent with the movement trajectory of the terminal, it is determined that the image characteristic of the edge region satisfies the predetermined image characteristic condition.

If the movement trajectory of the continuous region is consistent with the movement trajectory of the terminal, i.e., the continuous region moves with the movement of the terminal, it may be determined that the continuous region is shielded.

In this embodiment, under the prerequisite of satisfying the predetermined color value and the predetermined area range, the terminal further determines whether the movement trajectory of the edge region is consistent with the movement trajectory of the terminal, and if yes, it is considered that the picture is shielded. In this way, the accuracy of identifying the shielding object is further improved.

Fig. 5 shows a flow chart of a method for preventing a photograph from being shielded according to still another example embodiment of the present disclosure. As shown in Fig. 5, based on the determining method shown in Fig. 2, the following determining method may be added.

In block S501, if the area of the continuous region satisfies the predetermined area range, it is judged whether a difference between a brightness value of the continuous region and a brightness value of an image region except the continuous region in the picture captured by the camera is greater than a predetermined value.

When the user takes a picture, the picture captured by the camera would have a uniform brightness, or a brightness in a certain close range. If the picture is shielded, the part which is shielded has a brightness clearly distinguished from the picture which is captured now. In this block, by detecting the difference between the brightness value of the continuous region and the brightness value of the other part in the picture captured by the camera, it is judged whether the continuous region is shielded.

In block S502, if the difference is greater than the predetermined value, it is determined that the image characteristic of the edge region satisfies the predetermined image characteristic condition.

The predetermined value may be acquired by experiments or according to experience data.

If the difference is greater than the predetermined value, it may be determined that the picture is shielded.

In this embodiment, under the prerequisite of satisfying the predetermined color value and the predetermined area range, the terminal further determines the difference between the brightness value of the edge region and the brightness value of the other part in the picture, and if the difference is too big, it is considered that the picture is shielded. In this way, the accuracy of identifying the shielding object is further improved.

Fig. 6 shows a flow chart of a method for preventing a photograph from being shielded according to still yet another example embodiment of the present disclosure. As shown in Fig. 6, based on the determining method shown in Fig. 2, the following determining method may be added.

In block S601, if the area of the continuous region satisfies the predetermined area range, it is judged whether a fingerprint characteristic is contained in image content of the continuous region.

If the continuous region is shielded by the user's hand, an image in accordance with the fingerprint characteristic may appear. By detecting whether the fingerprint characteristic is contained in the image content, it may be judged whether the continuous region is shielded.

In block S602, if the fingerprint characteristic is contained in the image content of the continuous region, it is determined that the image characteristic of the edge region satisfies the predetermined image characteristic condition.

In this embodiment, under the prerequisite of satisfying the predetermined color value and the predetermined area range, the terminal further determines whether the fingerprint characteristic is contained in the image content of the edge region, and if yes, it is considered that the picture is shielded. In this way, the accuracy of identifying the shielding object is further improved.

Fig. 7 is a block diagram showing certain main elements of an apparatus for preventing a photograph from being inadvertently shielded according to an example embodiment of the present disclosure. Referring to Fig. 7, the apparatus includes an acquiring module 701, a judging module 702 and a determining module 703.

The acquiring module 701 is configured to acquire an image characteristic of an edge region in a picture captured by a camera, in which the image characteristic at least includes image color and an area of a continuous image with same image color.

The judging module 702 is configured to judge whether the image characteristic of the edge region satisfies a predetermined image characteristic condition.

The determining module 703 is configured to determine that the picture captured by the camera contains a shielding object and to issue a prompt message, if the image characteristic of the edge region satisfies the predetermined image characteristic condition.

Fig. 8 is a block diagram showing more detail of the apparatus for preventing a photograph from being shielded, according to the present example embodiment of the present disclosure. Referring to Fig. 8, the judging module 702 includes a first judging unit 7021, a first acquiring unit 7022, a second judging unit 7023 and a first determining unit 7024.

The first judging unit 7021 is configured to judge whether in the edge region there are pixels with color values equal to a predetermined color value.

The first acquiring unit 7022 is configured to acquire an area of a continuous region formed by the pixels with color values equal to the predetermined color value in the edge region, if there are the pixels with color values equal to the predetermined color value in the edge region.

The second judging unit 7023 is configured to judge whether the area of the continuous region satisfies a predetermined area range.

The first determining unit 7024 is configured to determine that the image characteristic of the edge region satisfies the predetermined image characteristic condition, if the area of the continuous region satisfies the predetermined area range.

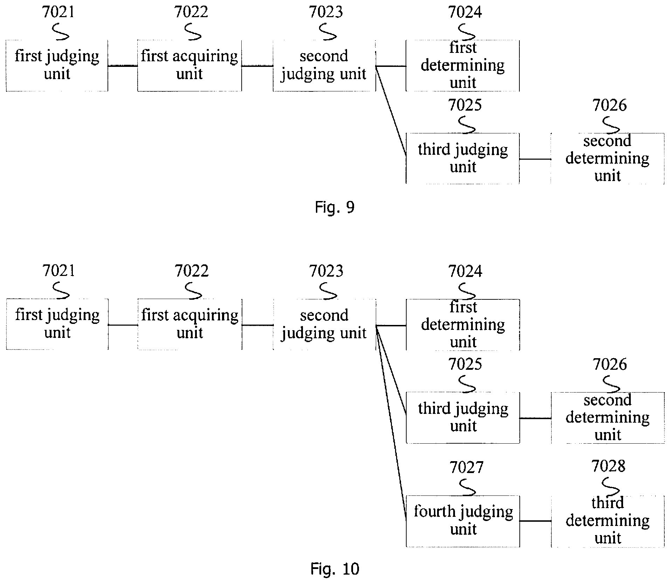

Fig. 9 is a block diagram showing yet more details of the apparatus for preventing a photograph from being shielded, according to the present example embodiment of the present disclosure. Referring to Fig. 9, the judging module 702 further includes a third judging unit 7025 and a second determining unit 7026.

The third judging unit 7025 is configured to judge whether an edge of the continuous region satisfies a predetermined optical parameter, if the area of the continuous region satisfies the predetermined area range.

The second determining unit 7026 is configured to determine that the image characteristic of the edge region satisfies the predetermined image characteristic condition, if the edge of the continuous region satisfies the predetermined optical parameter.

Fig. 10 shows a block diagram of an apparatus for preventing a photograph from being shielded, according to another example embodiment of the present disclosure. Referring to Fig. 10, the judging module 702 further includes a fourth judging unit 7027 and a third determining unit 7028.

The fourth judging unit 7027 is configured to judge whether a movement trajectory of the continuous region is consistent with a movement trajectory of a terminal, if the area of the continuous region satisfies the predetermined area range.

The third determining unit 7028 is configured to determine that the image characteristic of the edge region satisfies the predetermined image characteristic condition, if the movement trajectory of the continuous region is consistent with the movement trajectory of the terminal.

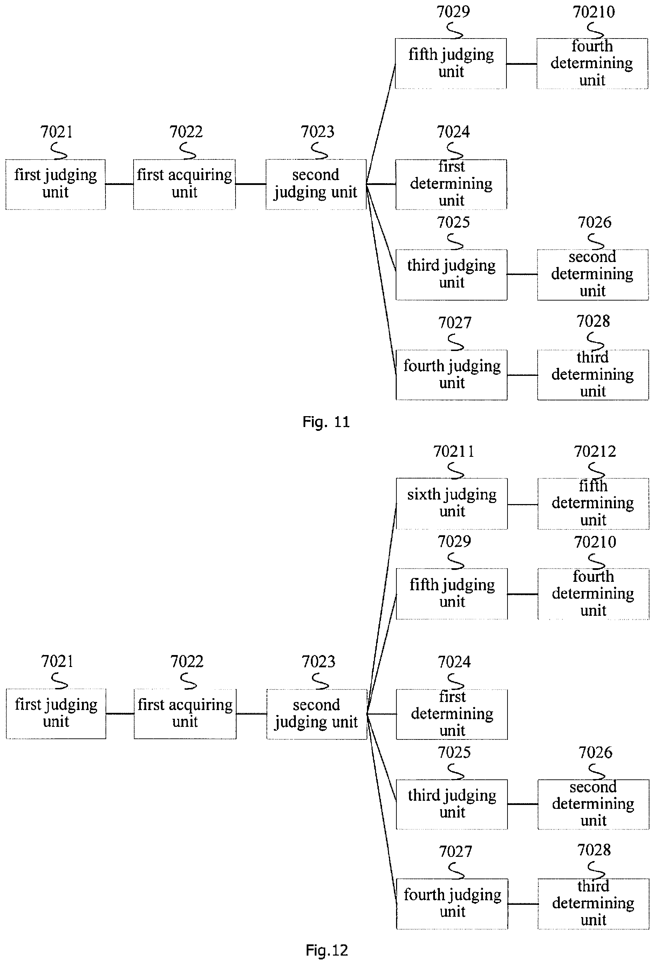

Fig. 11 shows a block diagram of an apparatus for preventing a photograph from being shielded, according to still another example embodiment of the present disclosure. Referring to Fig. 11, the judging module 702 further includes a fifth judging unit 7029 and a fourth determining unit 70210.

The fifth judging unit 7029 is configured to judge whether a difference between a brightness value of the continuous region and a brightness value of an image region except the continuous region in the picture captured by the camera is greater than a predetermined value, if the area of the continuous region satisfies the predetermined area range.

The fourth determining unit 70210 is configured to determine that the image characteristic of the edge region satisfies the predetermined image characteristic condition, if the difference is greater than the predetermined value.

Fig. 12 shows a block diagram of an apparatus for preventing a photograph from being shielded, according to yet another example embodiment of the present disclosure. Referring to Fig. 12, the judging module 702 further includes a sixth judging unit 70211 and a fifth determining unit 70212.

The sixth judging unit 70211 is configured to judge whether a fingerprint characteristic is contained in image content of the continuous region, if the area of the continuous region satisfies the predetermined area range.

The fifth determining unit 70212 is configured to determine that the image characteristic of the edge region satisfies the predetermined image characteristic condition, if the fingerprint characteristic is contained in the image content of the continuous region.

With respect to the apparatus in the above embodiments, the specific operation modes of individual modules therein have been described in detail in the embodiments regarding the processing methods, which will not be elaborated herein.

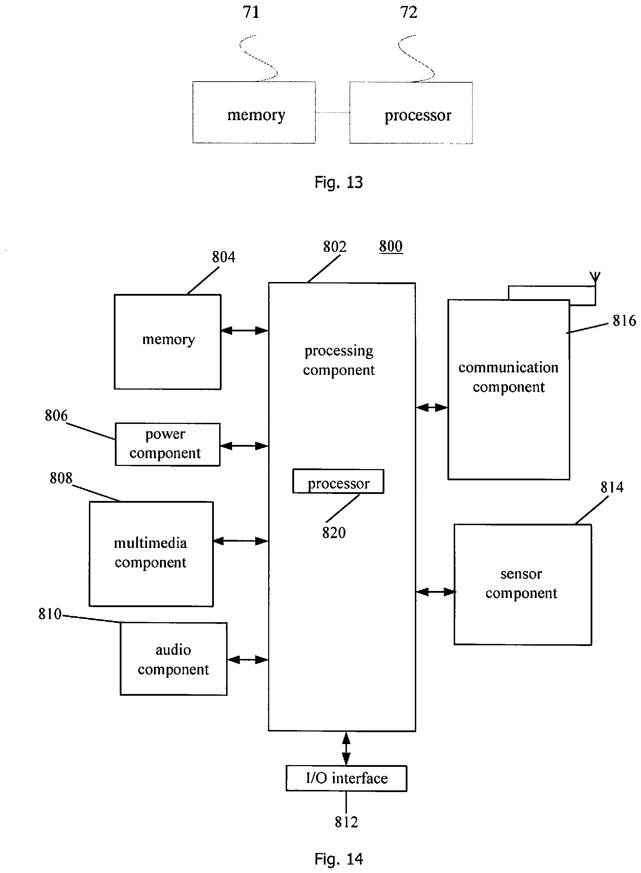

The internal functional modules and structure of the apparatus for preventing a photograph from being shielded have been described above. Fig. 13 shows a block diagram of a terminal according to an example embodiment of the present disclosure. As shown in Fig. 13, the terminal includes a memory 71 and a processor 72.

The memory 71 is configured to store an instruction executable by the processor.

The processor 72 is configured, when executing the instruction stored in the memory 71, to: acquire an image characteristic of an edge region in a picture captured by a camera, in which the image characteristic at least includes image color and an area of a continuous image with same image color; judge whether the image characteristic of the edge region satisfies a predetermined image characteristic condition; and determine that the picture captured by the camera contains a shielding object and issue a prompt message, if the image characteristic of the edge region satisfies the predetermined image characteristic condition.

In the above embodiment of the terminal, it should be understood that, the processor 72 may be a central processing unit (CPU), or may be another general processor, a digital signal processor (DSP), an application specific integrated circuit (ASIC), etc. The general processor may be a microprocessor, or may be other regular processors, etc. And the above memory may be a read-only memory (ROM), a random access memory (RAM), a flash memory, a disk or a solid state disk. A SIM card is known as a user identification card, an intelligent card, and a digital mobile phone provided with the SIM card can be used. That is, the computer chip stores information of a user of the digital mobile phone and content such as an encrypted cipher code and a telephone dictionary etc. The steps in a method obtained by combining embodiments of the present disclosure may be implemented by a hardware processor or a combination of hardware and software modules in the processor.

Fig. 14 shows a block diagram of a device 800 for preventing a photograph from being shielded, according to an example embodiment of the present disclosure. For example, the device 800 may be a mobile phone, a computer, a digital broadcasting terminal, a messaging device, a game console, a tablet device, a medical device, exercise equipment, and a personal digital assistant, etc.

Referring to Fig. 14, the device 800 may include one or more of following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 808 includes a front camera and/or a rear camera. The front camera and the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800 and relative positioning of components (e.g., the display and the keypad of the device 800). The sensor component 814 may also detect a change in position of the device 800 or of a component in the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WIFI, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A method for preventing a photograph from being shielded, comprising:
(S101) acquiring an image characteristic of an edge region in one picture captured by a camera, wherein the image characteristic at least comprises image color and an area of a continuous image with same image color;
(S102) judging whether the image characteristic of the edge region satisfies a predetermined image characteristic condition; and
(S103) determining that the picture captured by the camera contains a shielding object and issuing a prompt message, if the image characteristic of the edge region satisfies the predetermined image characteristic condition,
wherein (102) judging whether the image characteristic of the edge region satisfies a predetermined image characteristic condition comprises:
(S201) judging whether in the edge region there are pixels with color values equal to a predetermined color value;
(S202) acquiring an area of a continuous region formed by the pixels with color values equal to the predetermined color value in the edge region, if there are the pixels with color values equal to the predetermined color value in the edge region;
(S203) judging whether the area of the continuous region satisfies a predetermined area range; and
(S204) determining that the image characteristic of the edge region satisfies the predetermined image characteristic condition, if the area of the continuous region satisfies the predetermined area range,
**characterized by** (S102) judging whether the image characteristic of the edge region satisfies a predetermined image characteristic condition further comprises:
(S301) judging whether an edge of the continuous region satisfies a predetermined optical characteristic, if the area of the continuous region satisfies the predetermined area range; and
(S302) determining that the image characteristic of the edge region satisfies the predetermined image characteristic condition, if the edge of the continuous region satisfies the predetermined optical characteristic, wherein the optical characteristic comprises a diffraction characteristic.

2. The method according to claim 1, wherein (S102) judging whether the image characteristic of the edge region satisfies a predetermined image characteristic condition further comprises:
(S401) judging whether a movement trajectory of the continuous region is consistent with a movement trajectory of a terminal, if the area of the continuous region satisfies the predetermined area range; and
(S402) determining that the image characteristic of the edge region satisfies the predetermined image characteristic condition, if the movement trajectory of the continuous region is consistent with the movement trajectory of the terminal.

3. The method according to claim 1, wherein (S102) judging whether the image characteristic of the edge region satisfies a predetermined image characteristic condition further comprises:
(S501) judging whether a difference between a brightness value of the continuous region and a brightness value of an image region except the continuous region in the picture captured by the camera is greater than a predetermined value, if the area of the continuous region satisfies the predetermined area range; and
(S502) determining that the image characteristic of the edge region satisfies the predetermined image characteristic condition, if the difference is greater than the predetermined value.

4. The method according to claim 1, wherein (S102) judging whether the image characteristic of the edge region satisfies a predetermined image characteristic condition further comprises:
(S601) judging whether a fingerprint characteristic is contained in image content of the continuous region, if the area of the continuous region satisfies the predetermined area range; and
(S602) determining that the image characteristic of the edge region satisfies the predetermined image characteristic condition, if the fingerprint characteristic is contained in the image content of the continuous region.

5. An apparatus for preventing a photograph from being shielded, comprising:
an acquiring module (701), configured to acquire an image characteristic of an edge region in one picture captured by a camera, wherein the image characteristic at least comprises image color and an area of a continuous image with same image color;
a judging module (702), configured to judge whether the image characteristic of the edge region satisfies a predetermined image characteristic condition; and
a determining module (703), configured to determine that the picture captured by the camera contains a shielding object and to issue a prompt message, if the image characteristic of the edge region satisfies the predetermined image characteristic condition,
wherein the judging module (702) comprises:
a first judging unit (7021), configured to judge whether in the edge region there are pixels with color values equal to a predetermined color value;
a first acquiring unit (7022), configured to acquire an area of a continuous region formed by the pixels with color values equal to the predetermined color value in the edge region, if there are the pixels with color values equal to the predetermined color value in the edge region;
a second judging unit (7023), configured to judge whether the area of the continuous region satisfies a predetermined area range; and
a first determining unit (7024), configured to determine that the image characteristic of the edge region satisfies the predetermined image characteristic condition, if the area of the continuous region satisfies the predetermined area range,
**characterized by** the judging module (702) further comprising:
a third judging unit (7025), configured to judge whether an edge of the continuous region satisfies a predetermined optical characteristic, if the area of the continuous region satisfies the predetermined area range; and
a second determining unit (7026), configured to determine that the image characteristic of the edge region satisfies the predetermined image characteristic condition, if the edge of the continuous region satisfies the predetermined optical characteristic, wherein the optical characteristic comprises a diffraction characteristic.

6. The apparatus according to claim 5, wherein the judging module (702) further comprises:
a fourth judging unit (7027), configured to judge whether a movement trajectory of the continuous region is consistent with a movement trajectory of a terminal, if the area of the continuous region satisfies the predetermined area range; and
a third determining unit (7028), configured to determine that the image characteristic of the edge region satisfies the predetermined image characteristic condition, if the movement trajectory of the continuous region is consistent with the movement trajectory of the terminal.

7. The apparatus according to claim 5, wherein the judging module (702) further comprises:
a fifth judging unit (7029), configured to judge whether a difference between a brightness value of the continuous region and a brightness value of an image region except the continuous region in the picture captured by the camera is greater than a predetermined value, if the area of the continuous region satisfies the predetermined area range; and
a fourth determining unit (70210), configured to determine that the image characteristic of the edge region satisfies the predetermined image characteristic condition, if the difference is greater than the predetermined value.

8. The apparatus according to claim 5, wherein the judging module (702) further comprises:
a sixth judging unit (70211), configured to judge whether a fingerprint characteristic is contained in image content of the continuous region, if the area of the continuous region satisfies the predetermined area range; and
a fifth determining unit (70212), configured to determine that the image characteristic of the edge region satisfies the predetermined image characteristic condition, if the fingerprint characteristic is contained in the image content of the continuous region.

9. A computer-readable storage medium having stored therein instructions that, when executed by a processor of a terminal, causes the terminal to perform the method for preventing a photograph from being shielded according to any one of claims 1-4.

## Patentansprüche

1. Verfahren zum Verhindern der Abschirmung einer Fotografie, umfassend:
(S101) Erfassen einer Bildcharakteristik eines Randbereichs in einem von einer Kamera aufgenommenen Bild, wobei die Bildcharakteristik mindestens eine Bildfarbe und einen Bereich eines kontinuierlichen Bildes mit gleicher Bildfarbe umfasst,
(S102) Beurteilen, ob die Bildcharakteristik des Randbereichs eine vorbestimmte Bildcharakteristikbedingung erfüllt, und
(S103) Bestimmen, dass das von der Kamera aufgenommene Bild ein abschirmendes Objekt enthält, und Ausgeben einer Aufforderungsmeldung, wenn die Bildcharakteristik des Randbereichs die vorgegebene Bildcharakteristikbedingung erfüllt,
wobei (102) das Beurteilen, ob die Bildcharakteristik des Randbereichs eine vorbestimmte Bildcharakteristikbedingung erfüllt, umfasst:
(S201) Beurteilen, ob im Randbereich Pixel mit Farbwerten gleich einem vorbestimmten Farbwert vorhanden sind,
(S202) Erfassen einer Fläche eines zusammenhängenden Bereichs, der durch die Pixel mit Farbwerten gleich dem vorbestimmten Farbwert in dem Randbereich gebildet wird, wenn es die Pixel mit Farbwerten gleich dem vorbestimmten Farbwert in dem Randbereich gibt,
(S203) Beurteilen, ob die Fläche des zusammenhängenden Bereichs einem vorgegebenen Flächenbereich genügt, und
(S204) Bestimmen, dass die Bildcharakteristik des Randbereichs die vorbestimmte Bildcharakteristikbedingung erfüllt, wenn die Fläche des kontinuierlichen Bereichs dem vorbestimmten Flächenbereich genügt,
**dadurch gekennzeichnet, dass** (102) das Beurteilen, ob die Bildeigenschaft des Randbereichs eine vorbestimmte Bildeigenschaftsbedingung erfüllt, ferner umfasst:
(S301) Beurteilen, ob ein Rand des kontinuierlichen Bereichs eine vorbestimmte optische Eigenschaft erfüllt, wenn die Fläche des kontinuierlichen Bereichs dem vorbestimmten Flächenbereich genügt, und
(S302) Bestimmen, dass die Bildeigenschaft des Randbereichs die vorbestimmte Bildeigenschaftsbedingung erfüllt, wenn der Rand des kontinuierlichen Bereichs die vorbestimmte optische Eigenschaft erfüllt, wobei die optische Eigenschaft eine Beugungseigenschaft umfasst.

2. Verfahren nach Anspruch 1, wobei (S102) das Beurteilen, ob die Bildeigenschaft des Randbereichs eine vorbestimmte Bildeigenschaftsbedingung erfüllt, ferner umfasst:
(S401) Beurteilen, ob eine Bewegungstrajektorie des kontinuierlichen Bereichs mit einer Bewegungstrajektorie eines Endgeräts übereinstimmt, wenn die Fläche des kontinuierlichen Bereichs dem vorgegebenen Flächenbereich genügt, und
(S402) Bestimmen, dass die Bildcharakteristik des Randbereichs die vorbestimmte Bildcharakteristikbedingung erfüllt, wenn die Bewegungstrajektorie des kontinuierlichen Bereichs mit der Bewegungstrajektorie des Endgeräts übereinstimmt.

3. Verfahren nach Anspruch 1, wobei (S102) das Beurteilen, ob die Bildeigenschaft des Randbereichs eine vorbestimmte Bildeigenschaftsbedingung erfüllt, ferner umfasst:
(S501) Beurteilen, ob eine Differenz zwischen einem Helligkeitswert des kontinuierlichen Bereichs und einem Helligkeitswert eines Bildbereichs mit Ausnahme des kontinuierlichen Bereichs in dem von der Kamera aufgenommenen Bild größer als ein vorbestimmter Wert ist, wenn die Fläche des kontinuierlichen Bereichs dem vorbestimmten Flächenbereich genügt, und
(S502) Bestimmen, dass die Bildcharakteristik des Randbereichs die vorbestimmte Bildcharakteristikbedingung erfüllt, wenn die Differenz größer als der vorbestimmte Wert ist.

4. Verfahren nach Anspruch 1, wobei (S102) das Beurteilen, ob die Bildeigenschaft des Randbereichs eine vorbestimmte Bildeigenschaftsbedingung erfüllt, ferner umfasst:
(S601) Beurteilen, ob ein Fingerabdruckmerkmal im Bildinhalt des zusammenhängenden Bereichs enthalten ist, wenn die Fläche des zusammenhängenden Bereichs dem vorgegebenen Flächenbereich genügt, und
(S602) Bestimmen, dass die Bildcharakteristik des Randbereichs die vorbestimmte Bildcharakteristikbedingung erfüllt, wenn die Fingerabdruckcharakteristik im Bildinhalt des kontinuierlichen Bereichs enthalten ist.

5. Vorrichtung zur Verhinderung der Abschirmung einer Fotografie , umfassend:
ein Erfassungsmodul (701), das dazu konfiguriert ist, eine Bildcharakteristik eines Randbereichs in einem von einer Kamera aufgenommenen Bild zu erfassen, wobei die Bildcharakteristik mindestens eine Bildfarbe und einen Bereich eines kontinuierlichen Bildes mit derselben Bildfarbe umfasst,
ein Beurteilungsmodul (702), das dazu konfiguriert ist, zu beurteilen, ob die Bildcharakteristik des Randbereichs eine vorbestimmte Bildcharakteristikbedingung erfüllt, und
ein Bestimmungsmodul (703), das dazu konfiguriert ist, zu bestimmen, dass das von der Kamera aufgenommene Bild ein abschirmendes Objekt enthält, und eine Aufforderungsmeldung auszugeben, wenn die Bildcharakteristik des Randbereichs die vorbestimmte Bildcharakteristikbedingung erfüllt,
wobei das Beurteilungsmodul (702) umfasst:
eine erste Beurteilungseinheit (7021), die dazu konfiguriert ist, zu beurteilen, ob in dem Randbereich Pixel mit Farbwerten vorhanden sind, die gleich einem vorbestimmten Farbwert sind,
eine erste Erfassungseinheit (7022), die dazu konfiguriert ist, eine Fläche eines kontinuierlichen Bereichs erfasst, der durch die Pixel mit Farbwerten gleich dem vorbestimmten Farbwert in dem Randbereich gebildet wird, wenn es die Pixel mit Farbwerten gleich dem vorbestimmten Farbwert in dem Randbereich gibt,
eine zweite Beurteilungseinheit (7023), die dazu konfiguriert ist, zu beurteilen, ob die Fläche des kontinuierlichen Bereichs einem vorgegebenen Flächenbereich genügt, und
eine erste Bestimmungseinheit (7024), die dazu konfiguriert ist, zu bestimmen, dass die Bildeigenschaft des Randbereichs die vorbestimmte Bildeigenschaftsbedingung erfüllt, wenn die Fläche des kontinuierlichen Bereichs dem vorbestimmten Flächenbereich genügt,
**dadurch gekennzeichnet, dass** das Beurteilungsmodul (702) ferner umfasst:
eine dritte Beurteilungseinheit (7025), die dazu konfiguriert ist, zu beurteilen, ob eine Kante des kontinuierlichen Bereichs eine vorbestimmte optische Eigenschaft erfüllt, wenn die Fläche des kontinuierlichen Bereichs dem vorbestimmten Flächenbereich genügt, und
eine zweite Bestimmungseinheit (7026), die konfiguriert ist, um zu bestimmen, dass die Bildeigenschaft des Randbereichs die vorbestimmte Bildeigenschaftsbedingung erfüllt, wenn der Rand des kontinuierlichen Bereichs die vorbestimmte optische Eigenschaft erfüllt, wobei die optische Eigenschaft eine Beugungseigenschaft umfasst.

6. Vorrichtung nach Anspruch 5, wobei das Beurteilungsmodul (702) ferner umfasst:
eine vierte Beurteilungseinheit (7027), die dazu konfiguriert ist, zu beurteilen, ob eine Bewegungstrajektorie des kontinuierlichen Bereichs mit einer Bewegungstrajektorie eines Terminals konsistent ist, wenn die Fläche des kontinuierlichen Bereichs dem vorbestimmten Flächenbereich genügt, und
eine dritte Bestimmungseinheit (7028), die dazu konfiguriert ist, zu bestimmen, dass die Bildcharakteristik des Randbereichs die vorbestimmte Bildcharakteristikbedingung erfüllt, wenn die Bewegungstrajektorie des kontinuierlichen Bereichs mit der Bewegungstrajektorie des Terminals übereinstimmt.

7. Vorrichtung nach Anspruch 5, wobei das Beurteilungsmodul (702) ferner umfasst:
eine fünfte Beurteilungseinheit (7029), die dazu konfiguriert ist, zu beurteilen, ob eine Differenz zwischen einem Helligkeitswert des kontinuierlichen Bereichs und einem Helligkeitswert eines Bildbereichs mit Ausnahme des kontinuierlichen Bereichs in dem von der Kamera aufgenommenen Bild größer als ein vorbestimmter Wert ist, wenn die Fläche des kontinuierlichen Bereichs dem vorbestimmten Flächenbereich genügt, und
eine vierte Bestimmungseinheit (70210), die dazu konfiguriert ist, zu bestimmen, dass die Bildeigenschaft des Randbereichs die vorbestimmte Bildeigenschaftsbedingung erfüllt, wenn die Differenz größer als der vorbestimmte Wert ist.

8. Vorrichtung nach Anspruch 5, wobei das Beurteilungsmodul (702) ferner umfasst:
eine sechste Beurteilungseinheit (70211), die dazu konfiguriert ist, zu beurteilen, ob ein Fingerabdruckmerkmal im Bildinhalt des kontinuierlichen Bereichs enthalten ist, wenn die Fläche des kontinuierlichen Bereichs dem vorbestimmten Flächenbereich genügt, und
eine fünfte Bestimmungseinheit (70212), die dazu konfiguriert ist, zu bestimmen, dass die Bildcharakteristik des Randbereichs die vorbestimmte Bildcharakteristikbedingung erfüllt, wenn die Fingerabdruckcharakteristik in dem Bildinhalt des kontinuierlichen Bereichs enthalten ist.

9. Computerlesbares Speichermedium mit darin gespeicherten Befehlen, die, wenn sie von einem Prozessor eines Endgeräts ausgeführt werden, das Endgerät veranlassen, das Verfahren zum Verhindern der Abschirmung eines Fotos nach einem der Ansprüche 1 - 4 auszuführen.

## Revendications

1. Procédé pour empêcher une photographie d'être protégée, comprenant les étapes consistant à :
(S101) acquérir une caractéristique d'image d'une région de bord dans une vue capturée par une caméra, dans lequel la caractéristique d'image comprend au moins une couleur d'image et une zone d'une image continue avec la même couleur d'image ;
(S102) juger si la caractéristique d'image de la région de bord satisfait à une condition de caractéristique d'image prédéterminée ; et
(S103) déterminer que la vue capturée par la caméra contient un objet de protection et émettre un message d'invite, si la caractéristique d'image de la région de bord satisfait à la condition de caractéristique d'image prédéterminée,
dans lequel (102) le fait de juger si la caractéristique d'image de la région de bord satisfait à une condition de caractéristique d'image prédéterminée comprend :
(S201) le fait de juger si dans la région de bord, il y a des pixels avec des valeurs de couleur égales à une valeur de couleur prédéterminée ;
(S202) l'acquisition d'une zone d'une région continue formée par les pixels avec des valeurs de couleur égales à la valeur de couleur prédéterminée dans la région de bord, s'il y a les pixels avec des valeurs de couleur égales à la valeur de couleur prédéterminée dans la région de bord ;
(S203) le fait de juger si la zone de la région continue satisfait à une plage de zones prédéterminée ; et
(S204) le fait de déterminer que la caractéristique d'image de la région de bord satisfait à la condition de caractéristique d'image prédéterminée, si la zone de la région continue satisfait à la plage de zones prédéterminée,
**caractérisé en ce que** (S102) le fait de juger si la caractéristique d'image de la région de bord satisfait à une condition de caractéristique d'image prédéterminée comprend en outre :
(S301) le fait de juger si un bord de la région continue satisfait à une caractéristique optique prédéterminée, si la zone de la région continue satisfait à la plage de zones prédéterminée ; et
(S302) le fait déterminer que la caractéristique d'image de la région de bord satisfait à la condition de caractéristique d'image prédéterminée, si le bord de la région continue satisfait à la caractéristique optique prédéterminée, dans lequel la caractéristique optique comprend une caractéristique de diffraction.

2. Procédé selon la revendication 1, dans lequel (S102) le fait de juger si la caractéristique d'image de la région de bord satisfait à une condition de caractéristique d'image prédéterminée comprend en outre :
(S401) le fait de juger si une trajectoire de déplacement de la région continue est cohérente avec une trajectoire de déplacement d'un terminal, si la zone de la région continue satisfait à la plage de zones prédéterminée ; et
(S402) le fait de déterminer que la caractéristique d'image de la région de bord satisfait à la condition de caractéristique d'image prédéterminée, si la trajectoire de déplacement de la région continue est cohérente avec la trajectoire de déplacement du terminal.

3. Procédé selon la revendication 1, dans lequel (S102) le fait de juger si la caractéristique d'image de la région de bord satisfait à une condition de caractéristique d'image prédéterminée comprend en outre :
(S501) le fait de juger si une différence entre une valeur de luminosité de la région continue et une valeur de luminosité d'une région d'image à l'exception de la région continue dans la vue capturée par la caméra est supérieure à une valeur prédéterminée, si la zone de la région continue satisfait à la plage de zones prédéterminée ; et
(S502) le fait de déterminer que la caractéristique d'image de la région de bord satisfait à la condition de caractéristique d'image prédéterminée, si la différence est supérieure à la valeur prédéterminée.

4. Procédé selon la revendication 1, dans lequel (S102) le fait de juger si la caractéristique d'image de la région de bord satisfait à une condition de caractéristique d'image prédéterminée comprend en outre :
(S601) le fait de juger si une caractéristique d'empreinte digitale est contenue dans un contenu d'image de la région continue, si la zone de la région continue satisfait à la plage de zones prédéterminée ; et
(S602) le fait de déterminer que la caractéristique d'image de la région de bord satisfait à la condition de caractéristique d'image prédéterminée, si la caractéristique d'empreinte digitale est contenue dans le contenu d'image de la région continue.

5. Appareil pour empêcher une photographie d'être protégée, comprenant : un module d'acquisition (701), configuré pour acquérir une caractéristique d'image d'une région de bord dans une vue capturée par une caméra, dans lequel la caractéristique d'image comprend au moins une couleur d'image et une zone d'une image continue avec la même couleur d'image ;
un module de jugement (702), configuré pour juger si la caractéristique d'image de la région de bord satisfait à une condition de caractéristique d'image prédéterminée ; et
un module de détermination (703), configuré pour déterminer que la vue capturée par la caméra contient un objet de protection et pour émettre un message d'invite, si la caractéristique d'image de la région de bord satisfait à la condition de caractéristique d'image prédéterminée,
dans lequel le module de jugement (702) comprend :
une première unité de jugement (7021), configurée pour juger si dans la région de bord il y a des pixels avec des valeurs de couleur égales à une valeur de couleur prédéterminée ;
une première unité d'acquisition (7022), configurée pour acquérir une zone d'une région continue formée par les pixels avec des valeurs de couleur égales à la valeur de couleur prédéterminée dans la région de bord, s'il y a les pixels avec des valeurs de couleur égales à la valeur de couleur prédéterminée dans la région de bord ;
une deuxième unité de jugement (7023), configurée pour juger si la zone de la région continue satisfait à une plage de zones prédéterminée ; et
une première unité de détermination (7024), configurée pour déterminer que la caractéristique d'image de la région de bord satisfait à la condition de caractéristique d'image prédéterminée, si la zone de la région continue satisfait à la plage de zones prédéterminée,
caractérisé en ce le module de jugement (702) comprend en outre :
une troisième unité de jugement (7025), configurée pour juger si un bord de la région continue satisfait à une caractéristique optique prédéterminée, si la zone de la région continue satisfait à la plage de zones prédéterminée ; et
une deuxième unité de détermination (7026), configurée pour déterminer que la caractéristique d'image de la région de bord satisfait à la condition de caractéristique d'image prédéterminée, si le bord de la région continue satisfait à la caractéristique optique prédéterminée, dans lequel la caractéristique optique comprend une caractéristique de diffraction.

6. Appareil selon la revendication 5, dans lequel le module de jugement (702) comprend en outre :
une quatrième unité de jugement (7027), configurée pour juger si une trajectoire de déplacement de la région continue est cohérente avec une trajectoire de déplacement d'un terminal, si la zone de la région continue satisfait à la plage de zones prédéterminée ; et
une troisième unité de détermination (7028), configurée pour déterminer que la caractéristique d'image de la région de bord satisfait à la condition de caractéristique d'image prédéterminée, si la trajectoire de déplacement de la région continue est cohérente avec la trajectoire de déplacement du terminal.

7. Appareil selon la revendication 5, dans lequel le module de jugement (702) comprend en outre :
une cinquième unité de jugement (7029), configurée pour juger si une différence entre une valeur de luminosité de la région continue et une valeur de luminosité d'une région d'image à l'exception de la région continue dans la vue capturée par la caméra est supérieure à une valeur prédéterminée, si la zone de la région continue satisfait à la plage de zones prédéterminée ; et
une quatrième unité de détermination (70210), configurée pour déterminer que la caractéristique d'image de la région de bord satisfait à la condition de caractéristique d'image prédéterminée, si la différence est supérieure à la valeur prédéterminée.

8. Appareil selon la revendication 5, dans lequel le module de jugement (702) comprend en outre :
une sixième unité de jugement (70211), configurée pour juger si une caractéristique d'empreinte digitale est contenue dans un contenu d'image de la région continue, si la zone de la région continue satisfait à la plage de zones prédéterminée ; et
une cinquième unité de détermination (70212), configurée pour déterminer que la caractéristique d'image de la région de bord satisfait à la condition de caractéristique d'image prédéterminée, si la caractéristique d'empreinte digitale est contenue dans le contenu d'image de la région continue.

9. Support de stockage lisible par ordinateur dans lequel sont stockées des instructions qui, lorsqu'elles sont exécutées par un processeur d'un terminal, amènent le terminal à réaliser le procédé pour empêcher une photographie d'être protégée selon l'une quelconque des revendications 1 à 4.
